# EUROPEAN PATENT SPECIFICATION

(11) **EP 3 632 678 B1**
(45) Date of publication and mention of the grant of the patent: **23.03.2022**
(21) Application number: 19199816.0
(22) Date of filing: 26.09.2019
(51) Int. Cl.: B32B 37/12, E04B 1/84, E04B 1/86, G10K 11/168, B32B 5/02, B32B 5/22, B32B 5/24, B32B 7/12, B32B 15/14, B32B 15/20, E04B 2/74, E04B 1/74

(54) **SOUND ABSORBING PANEL**
SCHALLDÄMMPLATTE
PANNEAU ISOLANT SONORE

(30) Priority: 03.10.2018 IT 201800009147
(43) Date of publication of application: 08.04.2020
(73) Proprietor: Metalway S.r.l., 64018 Tortoreto (TE) (IT)
(72) Inventor: MOLTENI, Roberto, 40014 Crevalcore (BO) (IT)
(74) Representative: Piovesana, Paolo

(56) References cited:
- FR-A1- 2 808 248
- US-A- 5 832 685
- US-A1- 2003 003 267
- US-A1- 2003 134 553
- US-A1- 2004 121 110
- US-A1- 2017 087 797
- DATABASE WPI Week 200605 Thomson Scientific, London, GB; AN 2006-042038 XP002796325, & JP 2005 345847 A (NICHIAS CORP) 15 December 2005 (2005-12-15)

## Description

The present invention relates to a sound-absorbing panel.

Sound-absorbing panels obtained from a layer of thermobonded polyester fibers, possibly coated on one or both surfaces with a fabric and then subjected to thermoforming within a mold which, in addition to reducing its thickness in accordance with the final result to be obtained, creates a rigid finishing edge are known.

These known panels are generally used in all cases in which soundproofing characteristics are required and in particular when it is required to create sound-absorbent wall coverings or room separations or separations of work stations on desks and worktops in general.

In offices, call centers and other particularly noisy environments an extensive use of sound-absorbing panels is obviously able to improve the quality of the environment. In particular, the medium-high frequency range (over 315 Hz) is important to reduce the noise coming from devices such as phones, cell phones, computers, printers or other devices, but above all from the human voice, which has a range between 80 and the 1500 Hz. Given the usual use of these sound-absorbing panels in offices, meeting rooms, or other environments, where these noises are prevalent, an improvement in the sound absorption coefficient α in this range of frequencies is highly recommended.

A sound-absorbing panel with the characteristics indicated above is disclosed in particular by EP 3354814.

A drawback that can be found in some of the traditional sound-absorbing panels in polyester fibers is the limited structural rigidity which does not make them suitable for all uses. In particular, when these panels are applied horizontally to a ceiling or are in any case constrained to a horizontal surface and are held at the perimetric edges, they tend to curve downwards. This phenomenon is particularly evident in the case of large panels (over 140 cm), which are usually applied to cover the interior walls of meeting rooms, or other rooms.

In addition to constituting an aesthetic limitation, this inconvenience could also affect the lifespan of the product, which under this stress can lose or at least modify their aesthetic qualities.

US2003/0003267 describes a shelf with sound-absorbing properties for the rear luggage rack of a car. It is formed by an inner layer of thermoplastic honeycomb material, to which two reinforcing layers (one upper and one lower) made of precompressed fibers, for example polypropylene fibers reinforced with glass fibers or carbon fibers, are associated. This solution, however, is not fully satisfactory since the sound-absorbing properties are placed in the background with respect to the mechanical properties, since the racks for roof racks must be able to support objects weighing even more than 30 kg.

US 5832685 describes a panel made of non-woven fabric, supported by an external frame and configured to be used in the covering of ceilings. The panel in particular is made with a layer of non-woven fabric which is glued, by means of an adhesive layer, to a layer of fabric. However, this solution is not fully satisfactory since the presence of an external frame limits the possible applications of the panel, which cannot be used inside a room without being mounted on the frame itself, which is thus called to play an essential structural role.

US 2017/0087797 describes a panel made of thermoplastic material comprising one or more outer layers of thermoplastic polypropylene arranged in a sandwich around a layer comprising a series of reliefs arranged according to a honeycomb pattern. However, this solution is not fully satisfactory since the honeycomb layer comprises a series of reliefs, not holes, which are inserted into the outer layers of propylene following the thermoforming process, thus preventing the formation of the air pockets that guarantee sound absorption.

US 2003/0134553 describes a sound-absorbing article having a thickness of between 1 and 2 mm and having an absorption value of between 0.8 and 0.85. The article is made starting from a breathable material, preferably fibrous, to a face of which, and preferably to the face opposite to that from which the sound originates, a layer of honeycomb material can be coupled. Conveniently, the layer of honeycomb material can in turn be covered by a non-breathable membrane. Moreover, the breathable material comprises a coating, preferably made of inorganic material to increase its specific weight. However, this solution is not fully satisfactory since the layer of honeycombed material is not completely surrounded by the sound-absorbing material, and therefore the panel is highly asymmetrical in the sense that it is sound-absorbing essentially only on one surface.

The object of the invention is to propose a sound-absorbing panel which does not have these drawbacks.

Another object of the invention is to propose a sound-absorbing panel with improved mechanical properties with respect to those of traditional sound-absorbing panels.

Another object of the invention is to propose a sound-absorbing panel with improved sound-absorbing qualities compared to those of traditional sound-absorbing panels, especially in the mid-frequency range.

Another object of the invention is to propose a sound-absorbing panel which does not involve a substantial increases in production costs compared to those of traditional sound-absorbing panels.

Another object of the invention is to propose a sound-absorbing panel which with respect to certain traditional sound-absorbing panels retains longer the aesthetic characteristics.

Another object of the invention is to propose a sound-absorbing panel which is both an improvement and/or an alternative to conventional sound-absorbing panels.

All the objects mentioned herein, considered both individually and in any combination thereof, and others which will be apparent from the following description, are achieved, according to the invention, with a sound-absorbing panel as defined in claim 1.

The present invention is hereinafter further clarified in some of its preferred embodiments, which are given purely by way of a non-limiting example with reference to the accompanying drawings, in which:
- Figure 1: shows a longitudinal section of a sound-absorbing panel according to the invention,
- Figure 2: shows in a longitudinal section and in an exploded condition its components before they are subjected to a manufacturing process by thermoforming,
- Figure 3: shows it in longitudinal section at the beginning of the thermoforming process,
- Figure 4: shows a graph of the results of the measurements of the coefficient of sound absorption carried out according to the standards UNI EN ISO 10534-2:2001 in two different sound-absorbing panels according to the invention and, for comparison, in a traditional panel, all having the same external dimensions,
- Figure 5: shows in longitudinal section a sound-absorbing panel according to the invention in a different embodiment, and
- Figure 6: shows it in longitudinal section at the beginning of the thermoforming process.

As can be seen from the figures, the sound-absorbing panel 2 comprises at least one sound-absorbing layer 8, 12 of thermobonded fibers and, moreover, within said at least one sound-absorbing layer of fibers 8,12, comprises a substantially rigid alveolar insert of honeycomb material 10.

Moreover, said panel 2 also comprises a perimetric edge 23 which, suitably is made only with said layers of fibers 8, 12, and is more compressed with respect to the more central and internal area of the panel itself. In particular, at the perimetric edge 23, the layers of fibers 8, 12 are more compressed with respect to the innermost area of the panel, an area in which said alveolar insert 10 is provided.

Preferably, at its perimetric edge 23, the thickness of the panel 2 is lower than that of the inner and central area of the panel itself.

Suitably, the thickness of said alveolar insert 10 is substantially constant along the length and width of the insert itself.

Conveniently, the alveolar insert 10 is completely surrounded by fibers of said layer of fibers 8 and 12.

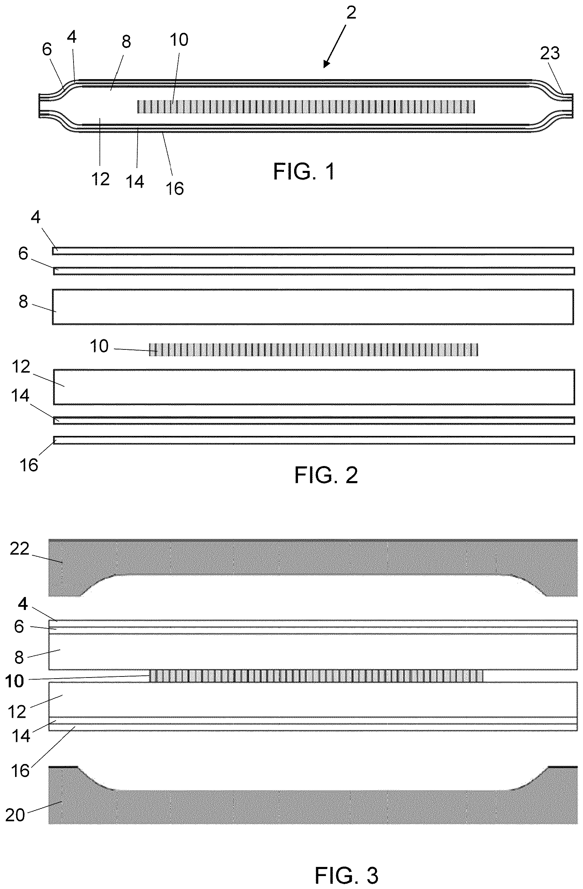

In particular, according to the invention, said panel 2 comprises (Fig. 1):
- a first external coating layer 4 which, preferably, is useful for giving the panel 2 aesthetic properties that allow the user to feel that he is facing a high quality product,
- a first sound-absorbing layer of fibers, preferably thermally bonded 8,
- a first adhesive film 6 interposed between the first coating layer 4 and the first layer of fiber 8 to constrain the first coating layer 4 to the first layer of fiber 8,
- a alveolar insert 10 which is suitably affected by a plurality of through holes having a preferably hexagonal cross section, but alternatively of any other shape and arrangement,
- a second layer of fibers 12,
- a second outer coating layer 16,
- a second adhesive film 14 interposed between the second outer coating layer 16 and the second layer of fiber 12.

The layers 8, 12 can be made of polymeric materials, such as polyester, or polypropylene, or alternatively they can be made of plant materials. Preferably they are made of thermally bonded polyester fibers.

Appropriately, "alveolar insert" 10 means an insert made of honeycomb material, i.e. intrinsically comprising a plurality of holes arranged in a regular or irregular structure (for example zeolites, aerogel, etc. Advantageously, said alveolar insert 10 is of the laminar type (i.e. the extension of the thickness is much smaller than that of the other two dimensions in length and width thereof) and has an alveolar internal core/structure, honeycomb, in which the cells/alveoli are side by side and parallel to each other along the thickness of the insert itself. Advantageously, each base/face of said insert 10 is flat and, preferably, are always parallel to each other.

The alveolar insert 10 can be advantageously made of fireproof paper, or of polycarbonate, or of ABS, or of aluminum or other materials suitable for that use.

In any case, the alveolar insert 10 suitably performs a sound-absorbing function and also a function of stiffening the panel 2, in particular in order to give a better planarity to the panel itself.

Advantageously, this allows to make sound-absorbent panels 2 sufficiently rigid to be able to be installed without the need for a supporting frame. Preferably, the compression of the layer of sound-absorbing fibers at the central area and at the peripheral edge define the main structural part of the panel, while the presence of the alveolar insert 10 gives the panel a better planarity, while ensuring sound absorption.

Conveniently, the edge of said alveolar insert 10 is completely and only surrounded by fibers of said layer of fibers 8,12. Conveniently, in other words, the alveolar insert 10 is entirely housed inside said at least one layer of fibers 8, 12. Preferably, the alveolar insert 10 occupies only the central area (both in the sense of thickness and in the other two directions) of the panel.

Advantageously, the cellular insert 10 covers a surface comprised between 30 and 50%, preferably around 35% of the surface of the sound-absorbing panel 2.

Advantageously, the alveolar insert 10 has a thickness comprised between 7 and 10 mm, preferably of about 10 mm.

Advantageously, the alveolar insert 10 has a complex structure, comprising a high number of cells per square meter, with dimensions ranging from 5 to 8 mm, which, even after the thermoforming process, remain distinct from the layer of fibers 8,12 and are substantially full of air.

Preferably, the alveolar insert 10 has a cell density between 25,000 and 50,000 per square meter.

Advantageously, the alveolar insert 10 is covered, on both sides, by the layers of sound-absorbing fibers 8, 12 so as to present a product with a homogeneous appearance.

Preferably the panel 2 is symmetrical with respect to a plane that cuts the alveolar insert 10 in half, and parallel to the two faces of the panel itself, so as to have the same sound-absorbing properties on the two faces, since the two layers of fibers 8 , 12 have substantially the same thickness.

Advantageously, the layers of raw fiber (i.e. before being subjected to the appropriate processes for making the sound-absorbing panel 2 described below) can have a thickness of 70-90 mm.

Alternatively, the panel 2 can be asymmetrical, in the sense that one of the two layers of fibers 8, 12 can be substantially thicker than the other, thus defining a surface with better sound-absorbing properties in reflection. This can be particularly useful in the case of panels that must be applied in correspondence of walls or ceilings, in which the sound arrives substantially only on one surface.

The production process for obtaining the sound-absorbing panel according to the invention advantageously provides to first create a stratification of the various components, which will form the panel, that is, starting from the bottom, the second coating layer 16, the second adhesive film 14, the second layer of fiber 12, the alveolar insert 10, the first layer of fiber 8, the first adhesive film 6 and the first coating layer 4 (Fig. 2).

Advantageously, the two layers of fiber 8, 12 can be prestressed.

Subsequently, the layered assembly of these components is introduced into a furnace and brought to a temperature between 180°C and 200°C so as to cause the softening of the sound-absorbing fibers. In particular, during this passage the two layers of fibers 8, 12 can join together so as to form a single layer, comprising the alveolar insert inside and in the central zone.

Finally, the thus heated layered assembly is extracted from the furnace and introduced into a mold, comprising a lower half-mold 20 and an upper half-mold 22, both preferably affected by symmetrical impressions, which together define a cavity complementary to the shape of the panel 2 to be obtained (fig. 3).

Advantageously, the two half-molds 20, 22, once joined and closed, can define within them a closed and isolated environment with respect to the outside, and inside which it is contained completely said stratified whole to be molded.

Advantageously, the heating process and the subsequent molding can be carried out so that the fibers making up the layers 8, 12 do not penetrate into the through cavities present on the alveolar insert 10, thus allowing them to remain filled with air.

Advantageously, the absence of penetration of the fibers that make up the layers 8, 12 in the cavities of the alveolar insert 10 makes it possible to easily separate the two layers in the event of dismemberment of the panel, and therefore allows the different components to be recycled separately. Conveniently, the alveolar insert 10 is incorporated in the layers 8, 12 of fibers without being glued and, therefore, said insert does not remain cohesive with the fibers that surround it, thus being easily removable during disposal and also guaranteeing a correct separation and differentiated recycling of various materials.

Advantageously, during the molding step the layers 8, 12 can be compressed in the central area (i.e. distant from the perimetric edge 23) until they present a final thickness equal to about 50% of the initial thickness.

Advantageously, during the molding step the layers 8, 12 can be compressed in the central area (i.e. distant from the perimetric edge 23) until they present a thickness of about 30/40 mm.

Advantageously, during the molding step the layers 8, 12 can be compressed at the perimetric edge 23 until they reach a thickness of about 5/7 mm.

Conveniently, the perimetric edge 23 has a higher compression than that of the rest of the panel, helping to improve its mechanical stability.

Alternatively, the two half-molds 20, 22 can have different shapes so as to allow the realization of an asymmetrical panel. In particular, for example, the two half-molds can have imprints of different depth, so that the alveolar insert 10 is in an asymmetrical position in the final product. This can be advantageous in the case in which it is desired to produce panels which must be installed in asymmetrical positions, for example in correspondence of a wall or a ceiling.

The panel 2, depending on the requirements, can have a thickness between 40 and 90 mm, and preferably between 50 and 80 mm.

Thanks to the discontinuity created by the alveolar insert 10 in the inner layer 8,12 of fibers, two important advantageous effects are obtained: one of these, of a mechanical nature, consists in an increase in the mechanical rigidity - and in particular of the planarity - of the panel and therefore in its greater non-deformability in any mode of application, even in the case of large-sized sound-absorbing panels. This allows, especially in the case of large panels, installation with a limited number of support points, preventing the risk of bending due to the gravity and poor rigidity of the panel itself. Basically, the presence of the alveolar insert 10 gives greater flatness to the panel itself.

The other important effect, of an acoustic nature, consists in an increase in the sound-absorbing properties of the panel, thanks to the better sound-absorbing properties of the alveolar insert 10 with respect to the sound-absorbing properties of a layer of compressed polyester fibers of equal thickness.

To ensure the mechanical stability of the sound-absorbing panel 2, it is advisable that the polyester fibers of the two layers 8,12 join along the perimeter band around the alveolar insert 10 and for this reason it is preferable that this insert has an extension smaller than that of the overall panel.

The sound-absorbing panel 2 preferably has an elongated rectangular shape, with rounded corners. This shape, combined with the possibility of joining several panels together, allows to obtain different geometries that allow a multiplicity of uses in different environments. It is however provided that the panel 2 may also have shapes different from the rectangular one.

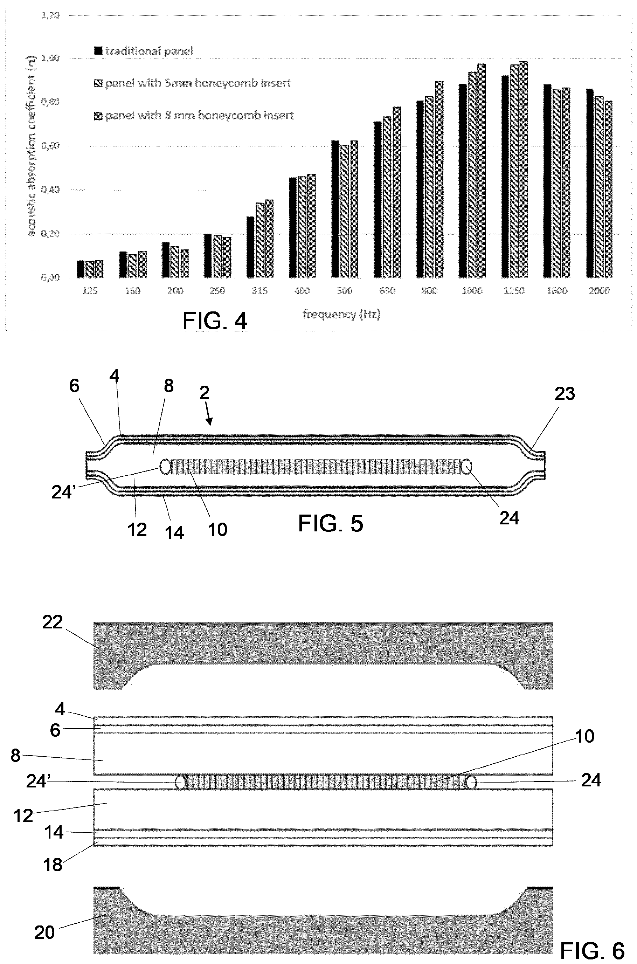

Advantageously, as shown in Figures 5 and 6, inside the panel 2 and in particular within said at least one layer of fibers 8, 12, at least one reinforcing element 24 may be added, hollow or solid, preferably having a circular or polygonal section. Preferably, said at least one reinforcing element 24 has a tubular development. Conveniently, said at least one reinforcing element 24 can contribute to improving the rigidity - and in particular flatness - of the panel, making it suitable for a greater number of installations.

In a first embodiment, two tubular reinforcing elements 24, 24' can be inserted, which are preferably positioned at the ends of the alveolar insert 10.

In a second embodiment the two tubular elements 24, 24' can be joined together at one end through a transverse element (not shown) which connects to the two elements themselves, and which as a whole substantially define a single tubular element 24.

Advantageously, in the case in which the panel has been made by means of a thermoforming process, said at least one tubular element 24 can be positioned in the stratification at the alveolar insert 10 (see Fig. 6).

In order to verify the sound-absorbing properties of the panel thus obtained, these were measured according to the UNI EN ISO 10534-2: 2001 standards on two panels obtained according to the invention but comprising a alveolar insert 10 with cavities in the shape of an equilateral triangle with sides of different lengths (5 mm and 8 mm) and on a traditional panel of identical dimensions.

The results of these tests are indicated in the graph of fig. 4, which shows the sound absorption coefficient of the three panels at the various measurement frequencies.

From the results of the tests it can be recognized that in the field of the frequencies of interest (above 315 Hz) the performance of the panel 2 according to the invention in both of its tested forms, namely that with the alveolar insert 10 having cells of size 5 mm and the one with the alveolar insert 10 having alveoli with size 8 mm, are generally better than those of a similar traditional panel and increase with the increase of the dimensions of the alveolar insert.

## Claims

1. A sound-absorbing panel (2) comprising at least one sound-absorbing layer of thermobonded fibers (8,12) and **characterized in that** it comprises, inside said at least one sound-absorbing layer (8,12), a alveolar insert of honeycomb material (10), and by the fact that:
- said alveolar insert of honeycomb material (10) has a substantially constant thickness,
- said alveolar insert of honeycomb material (10) is completely surrounded by the fibers of said at least one layer of fibers (8,12),
- said panel (2) comprises a perimeter edge (23) of only more compressed thermobound fibers.

2. Sound-absorbing panel according to claim 1 **characterized in that**:
- said layers of fibers (8,12) are made of fibers of polymeric material, preferably of polyester, and/or
- said alveolar insert of honeycomb material (10) is made of paper and/or aluminum and/or plastic, preferably in polyester or polycarbonate.

3. Sound-absorbing panel according to one or more of the preceding claims, **characterized in that** it comprises two covering sheets (4, 16) configured to cover, at least in part, said layer of fibers (8,12) on both surfaces.

4. Sound-absorbing panel according to one or more of the preceding claims, **characterized in that** said alveolar insert of honeycomb material (10) has a cell density of between about 25,000 and 50,000 per square meter.

5. Sound-absorbing panel according to one or more of the previous claims, **characterized in that** said alveolar insert of honeycomb material (10) extends to cover a surface comprised between about 30 and 50% of the total surface of the panel itself, preferably of about 35%.

6. Sound-absorbing panel according to one or more of the previous claims, **characterized in that**, outside the perimetric edge (23), preferably in correspondence with the central area of said panel, said fibers of said at least one layer (8, 12) are compressed up to reach a final thickness of about 50% of the initial thickness.

7. Sound-absorbing panel according to one or more of the preceding claims, **characterized in that** said alveolar insert of honeycomb material (10) has a thickness of between about 7 and 10 mm.

8. Sound-absorbing panel according to one or more of the previous claims, **characterized in that** it comprises two layers of precompressed fibers (8, 12) joined together to form a single layer comprising inside said alveolar insert of honeycomb material (10).

9. Sound-absorbing panel according to one or more of the preceding claims, **characterized in that** said alveolar insert of honeycomb material (10) is composed of alveoli which, after the thermoforming process, remain distinct from said layer of fiber (8,12) and are substantially full of air.

10. Sound-absorbing panel according to one or more of the preceding claims, **characterized in that** it comprises a multilayer which is constituted in sequence by: a first external coating layer (4), a first adhesive film (6), a first layer of fibers (8 ), a alveolar insert of honeycomb material (10), a second layer of fibers (12), a second adhesive layer (14), a second outer coating layer (16).

11. Sound-absorbing panel according to one or more of the preceding claims, **characterized in that** said first layer of fibers (8) and said second layer of fibers (12) have the same thickness.

12. Sound-absorbing panel according to one or more of the preceding claims, **characterized in that** it has a thickness of 40-90 mm, preferably of 50-80 mm.

13. Sound-absorbing panel according to one or more of the preceding claims, **characterized in that** it comprises, within said at least one layer of fibers (8,12), at least one tubular reinforcement element (24) for improving rigidity, and in particular the flatness of the panel itself.

14. Method for the production of a sound-absorbing panel according to one or more of the preceding claims, **characterized in that** it comprises the following steps:
- creating a stratification comprising, starting from the bottom, the second layer of fibers (12), the alveolar insert of honeycomb material (10), the first layer of fibers (8),
- introducing the stratified assembly thus created into an oven and bringing it to a temperature suitable for causing softening of the polyester fibers,
- introducing the stratified assembly thus heated into one mold comprising a lower half-mold (20) and an upper half-mold (22), which together define a cavity complementary to the shape of the panel (2) to be obtained to give the desired shape.

15. Method for the production of a sound-absorbing panel according to the previous claim, **characterized in that** said stratification to be introduced into the oven comprises, starting from the bottom, the second coating layer (16), the second adhesive film (14), the second layer of fibers (12), the alveolar insert of honeycomb material (10), the first layer of fibers (8), the first adhesive film (6) and the first coating layer (4).

## Patentansprüche

1. Schalldämmplatte (2), umfassend mindestens eine Schalldämmschicht aus thermisch verfestigten Fasern (8,12) und **dadurch gekennzeichnet, dass** sie, im Inneren der mindestens einen Schalldämmschicht (8,12), einen Alveolareinsatz aus Honigwabenmaterial (10) umfasst, und dadurch, dass:
- der Alveolareinsatz aus Honigwabenmaterial (10) eine im Wesentlichen konstante Dicke aufweist,
- der Alveolareinsatz aus Honigwabenmaterial (10) vollständig von den Fasern der mindestens einen Schicht aus Fasern (8,12) umgeben ist,
- die Platte (2) eine Umfangskante (23) nur aus mehr komprimierten thermisch verfestigten Fasern umfasst.

2. Schalldämmplatte nach Anspruch 1, **dadurch gekennzeichnet, dass**:
- die Schichten aus Fasern (8,12) aus Fasern von Polymermaterial, vorzugsweise von Polyester, bestehen und/oder
- der Alveolareinsatz aus Honigwabenmaterial (10) aus Papier und/oder Aluminium und/oder Kunststoff, vorzugsweise in Polyester oder Polycarbonat, besteht.

3. Schalldämmplatte nach einem oder mehreren der vorhergehenden Ansprüche, **dadurch gekennzeichnet, dass** sie zwei Deckschichten (4, 16) umfasst, die dazu ausgelegt sind, die Schicht aus Fasern (8,12) auf beiden Oberflächen mindestens teilweise abzudecken.

4. Schalldämmplatte nach einem oder mehreren der vorhergehenden Ansprüche, **dadurch gekennzeichnet, dass** der Alveolareinsatz aus Honigwabenmaterial (10) eine Zelldichte von zwischen etwa 25.000 und 50.000 pro Quadratmeter aufweist.

5. Schalldämmplatte nach einem oder mehreren der vorhergehenden Ansprüche, **dadurch gekennzeichnet, dass** sich der Alveolareinsatz aus Honigwabenmaterial (10) erstreckt, um eine Oberfläche abzudecken, die zwischen etwa 30 und 50 % der Gesamtoberfläche der Platte selbst, vorzugsweise von etwa 35 %, einschließt.

6. Schalldämmplatte nach einem oder mehreren der vorhergehenden Ansprüche, **dadurch gekennzeichnet, dass**, außerhalb der Umfangskante (23), vorzugsweise in Übereinstimmung mit dem Zentralbereich der Platte, die Fasern der mindestens einen Schicht (8, 12) komprimiert sind, um eine Enddicke von etwa 50 % der Anfangsdicke zu erreichen.

7. Schalldämmplatte nach einem oder mehreren der vorhergehenden Ansprüche, **dadurch gekennzeichnet, dass** der Alveolareinsatz aus Honigwabenmaterial (10) eine Dicke von zwischen etwa 7 und 10 mm aufweist.

8. Schalldämmplatte nach einem oder mehreren der vorhergehenden Ansprüche, **dadurch gekennzeichnet, dass** sie zwei Schichten aus vorkomprimierten Fasern (8, 12) umfasst, die miteinander verbunden sind, um eine einzige Schicht zu bilden, die im Inneren den Alveolareinsatz aus Honigwabenmaterial (10) umfasst.

9. Schalldämmplatte nach einem oder mehreren der vorhergehenden Ansprüche, **dadurch gekennzeichnet, dass** der Alveolareinsatz aus Honigwabenmaterial (10) aus Alveolen besteht, die nach dem Thermoformverfahren von der Schicht aus einer Fasern (8,12) getrennt bleiben und im Wesentlichen voller Luft sind.

10. Schalldämmplatte nach einem oder mehreren der vorhergehenden Ansprüche, **dadurch gekennzeichnet, dass** sie eine Mehrfachschicht umfasst, die der Reihe nach gebildet ist durch: eine erste externe Beschichtungsschicht (4), einen ersten Klebefilm (6), eine erste Schicht aus Fasern (8), einen Alveolareinsatz aus Honigwabenmaterial (10), eine zweite Schicht aus Fasern (12), eine zweite Klebeschicht (14), eine zweite äußere Beschichtung (16).

11. Schalldämmplatte nach einem oder mehreren der vorhergehenden Ansprüche, **dadurch gekennzeichnet, dass** die erste Schicht aus Fasern (8) und die zweite Schicht aus Fasern (12) die gleiche Dicke aufweisen.

12. Schalldämmplatte nach einem oder mehreren der vorhergehenden Ansprüche, **dadurch gekennzeichnet, dass** sie eine Dicke von 40-90 mm, vorzugsweise von 50-80 mm, aufweist.

13. Schalldämmplatte nach einem oder mehreren der vorhergehenden Ansprüche, **dadurch gekennzeichnet, dass** sie, innerhalb der mindestens einen Schicht aus Fasern (8,12), mindestens ein röhrenförmiges Verstärkungselement (24) zum Verbessern der Steifigkeit und insbesondere der Flachheit der Platte selbst umfasst.

14. Verfahren zur Herstellung einer Schalldämmplatte nach einem oder mehreren der vorhergehenden Ansprüche, **dadurch gekennzeichnet, dass** es die folgenden Schritte umfasst:
- Erzeugen einer Schichtung, umfassend, beginnend von unten, die zweite Schicht aus Fasern (12), den Alveolareinsatz aus Honigwabenmaterial (10), die erste Schicht aus Fasern (8),
- Einbringen der derart erzeugten geschichteten Anordnung in einen Ofen und Bringen derselben auf eine Temperatur, die dafür geeignet ist, ein Erweichen der Polyesterfasern zu bewirken,
- Einbringen der derart erhitzten geschichteten Anordnung in eine Form, umfassend eine untere Halbform (20) und eine obere Halbform (22), die zusammen einen Hohlraum definieren, der komplementär zu der Form der zu erhaltenden Platte (2) ist, um die gewünschte Form zu ergeben.

15. Verfahren zur Herstellung einer Schalldämmplatte nach dem vorhergehenden Anspruch, **dadurch gekennzeichnet, dass** die in den Ofen einzubringende Schichtung, beginnend von unten, die zweite Beschichtungsschicht (16), den zweiten Klebefilm (14), die zweite Schicht aus Fasern (12), den Alveolareinsatz aus Honigwabenmaterial (10), die erste Schicht aus Fasern (8), den ersten Klebefilm (6) und die erste Beschichtungsschicht (4) umfasst.

## Revendications

1. Panneau insonorisant (2) comprenant au moins une couche insonorisante de fibres thermoliées (8,12) et **caractérisé en ce qu'**il comporte, à l'intérieur de ladite au moins une couche insonorisante (8,12), une couche alvéolaire insert en matériau alvéolaire (10), et par le fait que :
- ledit insert alvéolaire en matériau alvéolaire (10) a une épaisseur sensiblement constante,
- ledit insert alvéolaire en matériau alvéolaire (10) est complètement entouré par les fibres de ladite au moins une couche de fibres (8, 12),
- ledit panneau (2) comprend un bord périmétrique (23) uniquement en fibres thermoliées hautement comprimées.

2. Panneau insonorisant selon la revendication 1 **caractérisé en ce que** :
- lesdites couches de fibres (8, 12) sont constituées de fibres de matériau polymère, de préférence de polyester, et/ou
- ledit insert alvéolaire en matériau alvéolaire (10) est en papier et/ou aluminium et/ou plastique, de préférence en polyester ou polycarbonate.

3. Panneau insonorisant selon une ou plusieurs des revendications précédentes, **caractérisé en ce qu'**il comprend deux feuilles de revêtement (4, 16) configurées pour recouvrir, au moins en partie, ladite couche de fibres (8, 12) sur les deux faces .

4. Panneau insonorisant selon une ou plusieurs des revendications précédentes, **caractérisé en ce que** ledit insert alvéolaire en matériau alvéolaire (10) a une densité de cellules comprise entre environ 25 000 et 50 000 par mètre carré.

5. Panneau insonorisant selon une ou plusieurs des revendications précédentes, **caractérisé en ce que** ledit insert alvéolaire en matériau alvéolaire (10) s'étend pour couvrir une surface comprise entre environ 30 et 50 % de la surface totale du panneau lui-même, de préférence d'environ 35 %.

6. Panneau insonorisant selon une ou plusieurs des revendications précédentes, **caractérisé en ce que**, à l'extérieur du bord périmétrique (23), de préférence en correspondance avec la zone centrale dudit panneau, lesdites fibres de ladite au moins une couche (8, 12) sont comprimés jusqu'à atteindre une épaisseur finale d'environ 50% de l'épaisseur initiale.

7. Panneau insonorisant selon une ou plusieurs des revendications précédentes, **caractérisé en ce que** ledit insert alvéolaire en matériau alvéolaire (10) a une épaisseur comprise entre environ 7 et 10 mm.

8. Panneau insonorisant selon une ou plusieurs des revendications précédentes, **caractérisé en ce qu'**il comprend deux couches de fibres précomprimées (8, 12) réunies pour former une seule couche comprenant à l'intérieur dudit insert du matériau alvéolaire (10).

9. Panneau insonorisant selon une ou plusieurs des revendications précédentes, **caractérisé en ce que** ledit insert alvéolaire en matériau alvéolaire (10) est composé d'alvéoles qui, après le processus de thermoformage, restent distinctes de ladite couche de fibres (8,12 ) et sont sensiblement remplis d'air.

10. Panneau insonorisant selon une ou plusieurs des revendications précédentes, **caractérisé en ce qu'**il comprend une multicouche qui est constituée successivement par : une première couche de revêtement externe (4), un premier film adhésif (6), une première couche de fibres (8), un insert alvéolaire en matériau alvéolaire (10), une seconde couche de fibres (12), une seconde couche adhésive (14), une seconde couche de revêtement externe (16).

11. Panneau insonorisant selon une ou plusieurs des revendications précédentes, **caractérisé en ce que** ladite première couche de fibres (8) et ladite deuxième couche de fibres (12) ont la même épaisseur.

12. Panneau insonorisant selon une ou plusieurs des revendications précédentes, **caractérisé en ce qu'**il a une épaisseur de 40 à 90 mm, de préférence de 50 à 80 mm.

13. Panneau insonorisant selon une ou plusieurs des revendications précédentes, **caractérisé en ce qu'**il comprend, à l'intérieur de ladite au moins une couche de fibres (8, 12), au moins un élément de renforcement tubulaire (24) pour améliorer la rigidité, et en particulier la planéité du panneau lui-même.

14. Procédé de fabrication d'un panneau insonorisant selon une ou plusieurs des revendications précédentes, **caractérisé en ce qu'**il comprend les étapes suivantes :
- créer une stratification comprenant, en partant du bas, la deuxième couche de fibres (12), l'insert alvéolaire en matériau alvéolaire (10), la première couche de fibres (8),
- introduire l'ensemble stratifié ainsi créé dans un four et le porter à une température apte à provoquer le ramollissement des fibres de polyester,
- introduire l'ensemble stratifié ainsi chauffé dans un moule comprenant un demi-moule inférieur (20) et un demi-moule supérieur (22), qui définissent ensemble une cavité complémentaire de la forme du panneau (2) à obtenir pour donner la forme désirée.

15. Procédé de réalisation d'un panneau insonorisant selon la revendication précédente, **caractérisé en ce que** ladite stratification à introduire dans le four comprend, en partant du bas, la deuxième couche de revêtement (16), le deuxième film adhésif (14 ), la deuxième couche de fibres (12), l'insert en matériau alvéolaire (10), la première couche de fibres (8), le premier film adhésif (6) et la première couche de revêtement (4).
